# EUROPÄISCHE PATENTSCHRIFT

(11) **EP 0 766 891 B1**
(45) Veröffentlichungstag und Bekanntmachung des Hinweises auf die Patenterteilung: **28.07.1999**
(21) Anmeldenummer: 95923182.0
(22) Anmeldetag: 20.06.1995
(51) Int. Cl.: H04L 1/24, H04Q 11/04, H04L 5/14, H04M 3/24

(54) **MESSEINRICHTUNG FÜR DIE U-SCHNITTSTELLE EINER ISDN-ÜBERTRAGUNGSSTRECKE MIT VOLLDUPLEX-ÜBERTRAGUNG IM ZWEIDRAHT-GLEICHLAGEVERFAHREN**
MEASURING DEVICE FOR THE U-INTERFACE OF AN ISDN TRANSMISSION PATH WITH FULL-DUPLEX TRANSMISSION USING THE COMMON CARRIER DUPLEX PROCESS
DISPOSITIF DE MESURE POUR L'INTERFACE U D'UN TRONCON DE TRANSMISSION RNIS EN DUPLEX INTEGRAL PAR PROCEDE DUPLEX A PORTEUSE COMMUNE

(30) Priorität: 21.06.1994 DE 4423333
(43) Veröffentlichungstag der Anmeldung: 09.04.1997
(73) Patentinhaber: TEKTRONIX, INC., Wilsonville, Oregon 97070-1000 (US)
(72) Erfinder: HOFFMANN, Klaus, D-81735 München (DE)
(74) Vertreter: Hofstetter, Alfons J., Dr.rer.nat.
(86) Internationale Anmeldenummer: DE9500836
(87) Internationale Veröffentlichungsnummer: WO9535607

(56) Entgegenhaltungen:
- EP-A- 0 009 592
- EP-A- 0 613 279
- US-A- 4 989 202
- US-A- 5 157 665
- NTZ ARCHIV, Bd.11, Nr.5, 1989, BERLIN DE Seiten 211 - 219, XP67725 U. TRICK: 'Ein Vergleich von Integrierten Schaltungen für die U-Schnittstelle im digitalisierten Ortsnetz.'

## Beschreibung

Es ist bekannt (siehe zum Beispiel US-A-4 989 202), daß eine ISDN(Integrated Services Digital Network)-Übertragungsstrecke zwischen der Übertragungsleitung und einem sog. Netzwerk eine U-Schnittstelle aufweist. Es ist ferner bekannt (vgl. "Siemens-KMT-Report" Nr.14, Bestell-Nr. E 80001-V331-W54, Seiten 6 und 7), an dieser U-Schnittstelle Messungen vorzunehmen und dafür eine entsprechende Meßeinrichtung vorzusehen. Mit dieser können zum Beispiel frequenzabhängige Messungen, funktionale Tests und auch Jitter-Messungen durchgeführt werden. Eine ISDN-Übertragungsstrecke stellt eine spezielle Form einer Übertragungsstrecke mit einer Vollduplex-Übertragung im Zweidrahtgleichlageverfahren dar.

Aus der europäischen Patentanmeldung EP 0 009 592 A1 ist ferner bekannt, in einer an eine Duplex-Leitung angeschlossenen Sende- und Empfangseinrichtung einen Differenzbildner für den Signalempfang vorzusehen. Dem Differenzbildner werden zwei Signale zugeführt, nämlich das eigene Sendesignal der eigenen Sende- und Empfangseinrichtung und das auf der Duplex-Leitung übertragene Gesamtsignal, das aus dem eigenen Sendesignal und einem zu empfangenen Signal einer anderen Sendeeinrichtung besteht. Der Differenzbildner hat die Aufgabe, von dem Gesamtsignal der Duplex-Leitung das eigene Sendesignal zu subtrahieren und in dieser Weise das Empfangen ausschließlich des Signals der anderen Sendeeinrichtung zu ermöglichen. Ein Übersprechen des eigenen Sendesignals in das zu empfangene Signal wird also unterdrückt.

Die Erfindung geht von einer Meßeinrichtung für die Schnittstelle einer Übertragungsstrecke mit einer Vollduplex-Übertragung im Zweidrahtgleichlageverfahren aus, bei der an die Schnittstelle einerseits ein hochintegrierter Schnittstellenbaustein über eine Gabelschaltung und einen Übertrager und andererseits ein Leitungsabschluß (LT) oder ein Netzwerkabschluß (NT) als Meßobjekt angeschlossen sind.

Der Erfindung liegt die Aufgabe zugrunde, physikalische Messungen an der Schnittstelle während des Übertragungsbetriebes auf vergleichsweise einfache Weise genau durchführen zu können.

Zur Lösung dieser Aufgabe ist erfindungsgemäß eine die Anordnung von Gabelschaltung, Übertrager und Leitungs- oder Netzwerkabschluß nachbildende Einrichtung vorhanden, die einen hochohmigen Differenzverstärker enthält, der eingangsseitig mit den Sendeausgängen des hochintegrierten Schnittstellenbausteins und ausgangsseitig über einen weiteren hochohmigen Differenzverstärker mit einem Eingang eines Subtrahierers verbunden ist, und eine in ihren elektrischen Eigenschaften mit der Gabelschaltung der Übertragungsstrecke identische Gabelschaltung, einen mit dem Übertrager der Übertragungsstrecke identischen Übertrager und einen in seinen elektrischen Eigenschaften mit dem Leitungs- oder Netzwerkabschluß der Übertragungsstrecke identischen Abschluß aufweist; ein weiterer Eingang des Subtrahierers ist über einen zusätzlichen hochohmigen Differenzverstärker mit der Schnittstelle verbunden, und an den Ausgang des Subtrahierers ist ein Meßsystem der Meßeinrichtung angeschlossen.

Der wesentliche Vorteil der erfindungsgemäßen Meßeinrichtung besteht darin, daß durch die Verwendung der nachbildenden Einrichtung und des Subtrahierers die Möglichkeit geschaffen ist, nur das vom jeweiligen Meßobjekt gesendete Signal untersuchen zu können, weil die zum Meßobjekt laufenden Signale und Informationen im Subtrahierer ausgefiltert werden, so daß am Ausgang des Subtrahierers nur das vom Meßobjekt gesendete Signal ansteht und von einem Meßsystem der Meßeinrichtung ohne weiteres ausgewertet werden kann.

Um die Vorteile der erfindungsgemäßen Meßeinrichtung auch dann zu erreichen, wenn eine Übertragungsstrecke mit einer Dämpfungseinrichtung an der Schnittstelle vorliegt, enthält die nachbildende Einrichtung der Meßeinrichtung zwischen dem identischen Übertrager und dem identischen Abschluß vorteilhafterweise eine mit der Dämpfungseinrichtung der Übertragungsstrecke in ihren elektrischen Eigenschaften identische Dämpfungseinrichtung.

Gegebenenfalls kann es auch vorteilhaft sein, bei einer Übertragungsstrecke mit einer Dämpfungseinrichtung an der Schnittstelle in der nachbildenden Einrichtung der Meßeinrichtung dem weiteren hochohmigen Differenzverstärker eine in ihrer Wirkung mit der Dämpfungseinrichtung der Übertragungsstrecke identische Dämpfungsanordnung nachzuschalten.

Zur Erläuterung der Erfindung ist in
- Figur 1: ein Ausführungsbeispiel der erfindungsgemäßen Meßeinrichtung, in
- Figur 2: ein weiteres Ausführungsbeispiel der erfindungsgemäßen Meßeinrichtung bei einer mit einer Dämpfungseinrichtung versehenen ISDN(Integrated Services Digital Network)-Übertragungsstrecke und in
- Figur 3: ein zusätzliches Ausführungsbeispiel der erfindungsgemäßen Meßeinrichtung bei einer mit einer Dämpfungseinrichtung versehenen ISDN(Integrated Services Digital Network)-Übertragungsstrecke dargestellt.

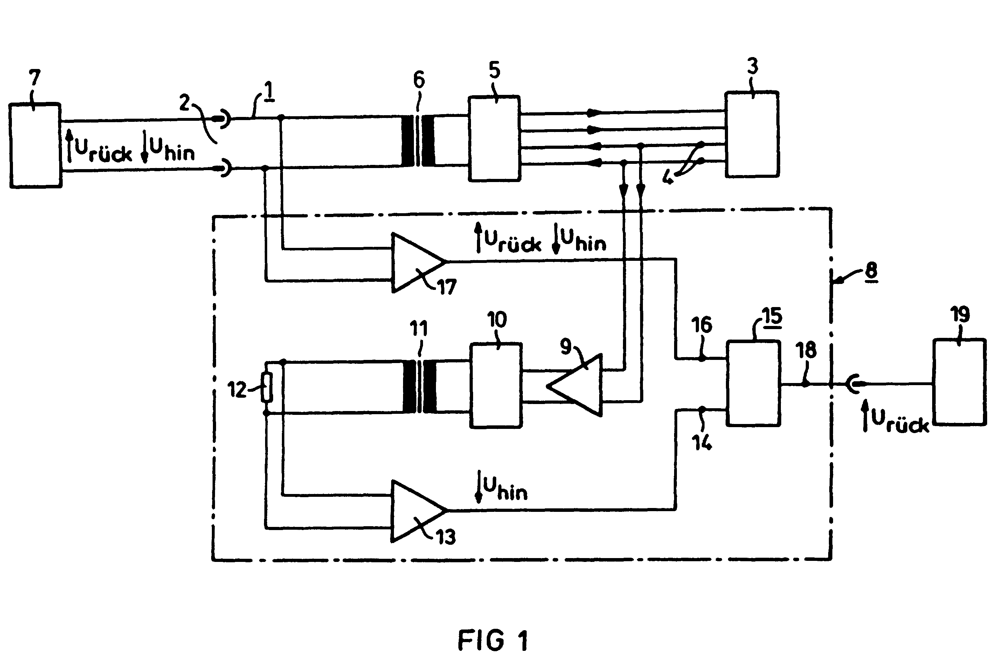

Figur 1 läßt zunächst einmal eine Übertragungsstrecke 1 mit einer Schnittstelle 2 erkennen, bei der es sich um eine U-Schnittstelle einer ISDN-Übertragungsstrecke als einer speziellen Form einer Übertragungsstrecke mit einer Vollduplex-Übertragung im Zweidrahtgleichlageverfahren handeln kann. An die U-Schnittstelle ist in bekannter Weise ein hochintegrierter Schnittstellenbaustein 3 angeschlossen. Im einzelnen ist dieser hochintegrierte Schnittstellenbaustein 3 über zwei Sendeausgänge 4 mit einer Gabelschaltung 5 verbunden, die in der Regel als Hybrid-Schaltung ausgebildet ist; die Gabelschaltung 5 ist über einen nachgeordneten Übertrager 6 mit der Schnittstelle 2 verbunden, an der andererseits ein Meßobjekt 7 liegt. Bei diesem Meßobjekt 7 kann es sich um einen Leitungsabschluß (LT) oder um einen Netzwerkabschluß (NT) handeln.

Wie die Figur 1 ferner zeigt, ist an die Sendeausgänge 4 des hochintegrierten Schnittstellenbausteins 3 eine Einrichtung 8 angeschlossen, die eingangsseitig einen hochohmigen Differenzverstärker 9 enthält. Diesem hochohmigen Differenzverstärker ist eine Gabelschaltung 10 nachgeordnet, die in ihren elektrischen Eigenschaften mit der Gabelschaltung 5 der Übertragungsstrecke 1 identisch ist. Auch ein der identischen Gabelschaltung 10 nachgeordneter Übertrager 11 stimmt mit dem Übertrager 6 der Übertragungsstrecke 1 überein. An den identischen Übertrager 11 ist ein Abschluß 12 angeschlossen, der in seinen elektrischen Eigenschaften mit dem Meßobjekt 7 identisch ist. An dem identischen Abschluß 12 liegt eingangsseitig ein weiterer hochohmiger Differenzverstärker 13, der ausgangsseitig mit einem Eingang 14 eines Subtrahierers 15 verbunden ist.

Ein weiterer Eingang 16 des Subtrahierers 15 ist über einen zusätzlichen hochohmigen Differerenzverstärker 17 mit der Schnittstelle 2 verbunden. An einen Ausgang 18 des Subtrahierers 15 ist ein Meßsystem 19 der Meßeinrichtung angeschlossen, das beispielsweise zur Jitter-Messung geeignet sein kann.

In der Figur 1 ist im Bereich der Schnittstelle 2 durch einen Pfeil mit der Bezeichnung "Uₕᵢₙ" zum Ausdruck gebracht, daß an der Schnittstelle 2 und damit auch am Eingang des zusätzlichen hochohmigen Differenzverstärkers 17 ein Signal ansteht, das von dem hochintegrierten Schnittstellenbaustein 3 über die Gabelschaltung 5 und den Übertrager 6 zum Meßobjekt 7 hin übertragen wird. Außerdem steht an der Schnittstelle 2 das Signal U_{rück} an, das von dem Meßobjekt 7 ausgesendet wird. Am Ausgang des zusätzlichen Differenzverstärkers 17 treten dadurch - weil diese eine Verstärkung von 1 aufweist - beide Signale Uₕᵢₙ und U_{rück} auf und werden über den Eingang 16 vom Subtrahierer 15 erfaßt. Dem Eingang 14 des Subtrahierers 15 wird aber nur das an den Sendeausgängen 4 des hochintegrierten Schnittstellenbausteins 3 abgegebene Signal Uₕᵢₙ über den Differenzverstärker 9, die identische Gabelschaltung 10, den identischen Übertrager 11 und den weiteren hochohmigen Verstärker 13 zugeführt. Infolge Differenzbildung tritt am Ausgang 18 des Subtrahierers 15 daher nur das Signal U_{rück} auf, das Informationen von dem bzw. über das Meßobjekt 7 enthält und damit in dem Meßsystem 19 beispielsweise auf Phasenjitter untersucht werden kann. Das Signal Uₕᵢₙ stört daher das Meßsystem 19 nicht.

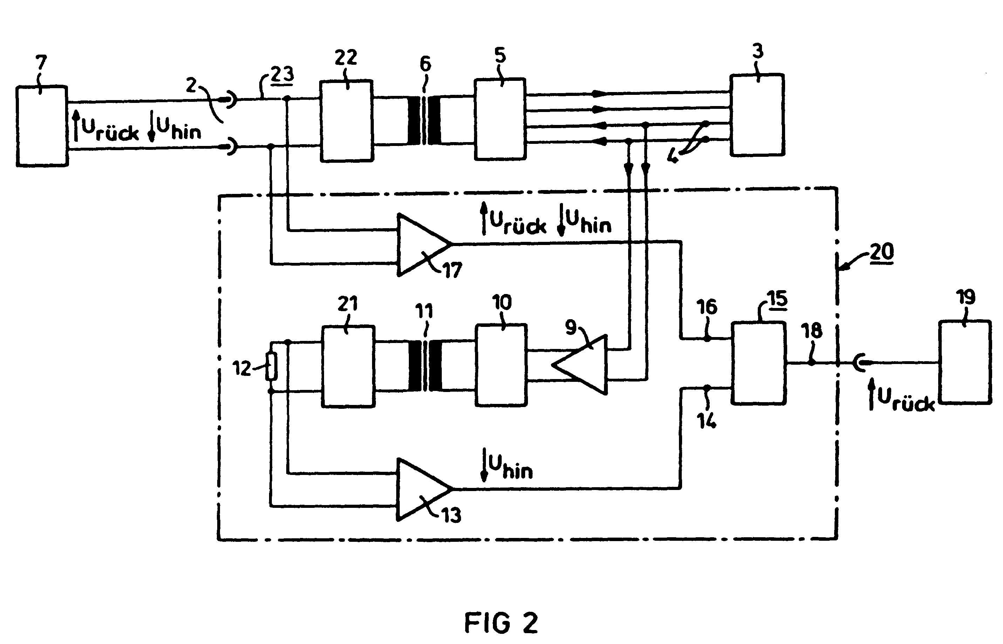

Das Ausführungsbeispiel nach Figur 2, in dem mit dem Ausführungsbeispiel nach Figur 1 übereinstimmende Bausteine mit gleichen Bezugszeichen versehen sind, unterscheidet sich von dem nach Figur 1 dadurch, daß in der nachbildenden Einrichtung 20 zwischen dem identischen Übertrager 11 und dem Abschluß 12 eine Dämpfungseinrichtung 21 angeordnet ist, die identisch mit einer Dämpfungseinrichtung 22 in der Übertragungsstrecke 23 zwischen dem Übertrager 6 und der Schnittstelle 2 ist. Die identische Dämpfungseinrichtung 21 stellt sicher, daß auch bei dieser Ausführungsform der erfindungsgemäßen Meßeinrichtung dem Eingang 14 des Subtrahierers 15 ein Signal Uₕᵢₙ zugeführt wird, das dem Signal Uₕᵢₙ an der Schnittstelle 2 entspricht. Gemessen wird von dem Meßsystem nur das Signal U_{rück}.

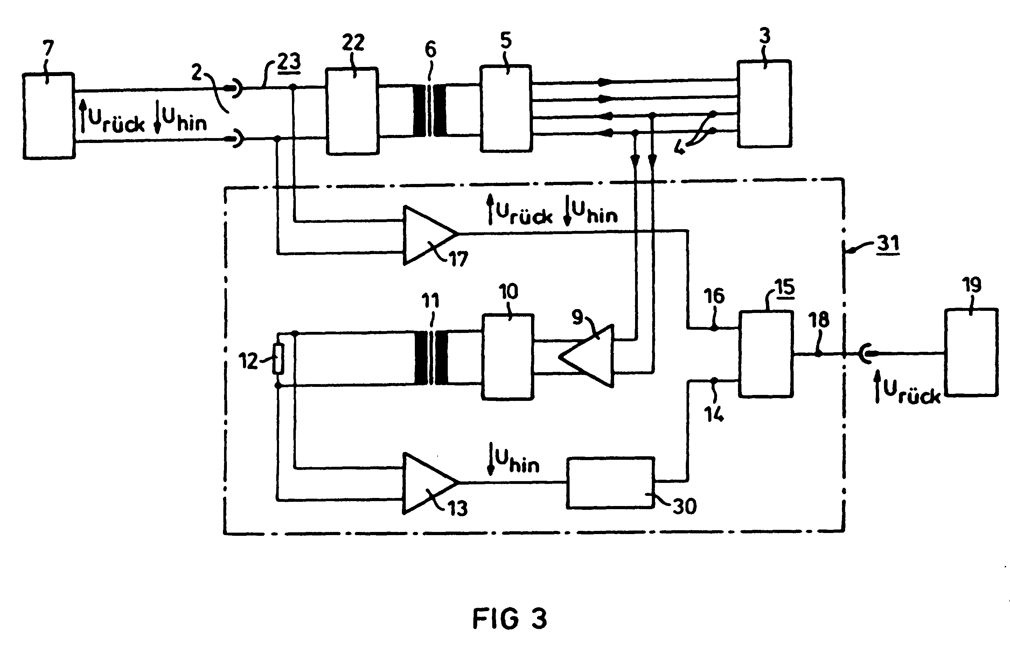

Das Ausführungsbeispiel nach Figur 3 unterscheidet sich von dem nach Figur 2 lediglich dahingehend, daß eine in ihren elektrischen Eigenschaften der Dämpfungseinrichtung 22 entsprechende Dämpfungsanordnung 30 in einer nachbildenden Einrichtung 31 an den Ausgang des weiteren hochohmigen Differenzverstärkers 13 angeschlossen ist, wodurch wiederum dafür gesorgt ist, daß am Eingang 14 des Subtrahierers 15 ein Signal Uₕᵢₙ ansteht, das dem entsprechenden Signal an der Schnittstelle 2 entspricht, so daß auch bei diesem Ausführungsbeispiel am Ausgang 18 des Subtrahierers 15 nur das Signal U_{rück} des Meßobjektes 7 auftritt.

## Patentansprüche

1. Meßeinrichtung für die Schnittstelle (2) einer Übertragungsstrecke (1) mit einer Vollduplex-Übertragung im Zweidrahtgleichlageverfahren, bei der an die Schnittstelle (2) einerseits ein hochintegrierter Schnittstellenbaustein (3) über eine Gabelschaltung (5) und einen Übertrager (6) und andererseits ein Leitungsabschluß (LT) oder ein Netzwerkabschluß (NT) als Meßobjekt (7) angeschlossen sind,
**dadurch gekennzeichnet,** daß
- eine die Anordnung von Gabelschaltung (5), Übertrager (6) und Leitungs- oder Netzwerkabschluß (7) nachbildende Einrichtung (8) vorhanden ist, die
- einen hochohmigen Differenzverstärker (9) enthält, der eingangsseitig mit den Sendeausgängen (4) des Schnittstellenbausteins (3) und ausgangsseitig über einen weiteren hochohmigen Differenzverstärker (13) mit einem Eingang (14) eines Subtrahierers (15) verbunden ist, und
- eine in ihren elektrischen Eigenschaften mit der Gabelschaltung (5) der Übertragungsstrecke (1) identische Gabelschaltung (10), einen mit dem Übertrager (6) der Übertragungsstrecke (1) identischen Übertrager (11) und einen in seinen elektrischen Eigenschaften mit dem Leitungs- oder Netzwerkabschluß (7) der Übertragungsstrecke (1) identischen Abschluß (12) aufweist,
- ein weiterer Eingang (16) des Subtrahierers (15) über einen zusätzlichen hochohmigen Differenzverstärker (17) mit der Schnittstelle (2) verbunden ist und
- an den Ausgang (18) des Subtrahierers (13) ein Meßsystem (19) der Meßeinrichtung angeschlossen ist.

2. Meßeinrichtung nach Anspruch 1,
**dadurch gekennzeichnet**, daß
- bei einer Übertragungsstrecke (23) mit einer Dämpfungseinrichtung (22) an der Schnittstelle (2)die nachbildende Einrichtung (20) der Meßeinrichtung zwischen dem identischen Übertrager (11) und dem identischen Abschluß (12) eine mit der Dämpfungseinrichtung (22) der Übertragungsstrecke in ihren elektrischen Eigenschaften identische Dämpfungseinrichtung (21) enthält.

3. Meßeinrichtung nach Anspruch 1,
**dadurch gekennzeichnet,** daß
- bei einer Übertragungsstrecke (23) mit einer Dämpfungseinrichtung (22) an der Schnittstelle (2) in der nachbildenden Einrichtung (31) der Meßeinrichtung dem weiteren hochohmigen Differenzverstärker (13) eine in ihrer Wirkung mit der Dämpfungseinrichtung (22) der Übertragungsstrecke (23) identische Dämpfungsanordnung (30) nachgeschaltet ist.

## Claims

1. A measuring device for the interface (2) of a transmission path (1) with full-duplex transmission using the common carrier duplex process, in which what is connected to the interface (2) is a highly integrated interface component (3) via a hybrid set (5) and a transformer (6) on the one hand, and a line terminal (LT) or a network terminal (NT) as a test object (7) on the other hand,
**characterized in**
that
- means (8) imitating the arrangement of hybrid set (5), transformer (6) and line or network terminal (7) is provided which includes
- a high-impedance differential amplifier (9) which has its input connected to the send outputs (4) of the interface component (3) and has its outputs connected to an input (14) of a subtracter (15) via a further high-impedance differential amplifier (13), and includes
- a hybrid set (10) which is identical in its electrical properties to the hybrid set (5) of the transmission path (1), a transformer (11) identical to the transformer (6) of the transmission path (1) as well as a terminal (12) which is identical in its electrical properties to the line or network terminal (7) of the transmission path (1),
- a further input (16) of the subtracter (15) is connected to the interface (2) via an additional high-impedance differential amplifier (17), and
- connected to the output (18) of the subtracter (13) is a measuring system (19) of the measuring means.

2. The measuring device as claimed in claim 1
**characterized in**
that
- in a transmission path (23) with an attenuation device (22) at the interface (2), the imitating means (20) of the measuring means has an attenuation device (21) which is identical in its electrical properties to the attenuation device (22) of the transmission path and which is provided between the identical transformer (11) and the identical terminal (12).

3. The measuring device as claimed in claim 1
**characterized in**
that
- in a transmission path (23) with an attenuation device (22) at the interface (2), in the imitating device (31) of the measuring means, an attenuation array (30) identical in its effect to the attenuation device (22) of the transmission path (23) is post-connected to the further high-impedance differential amplifier (13).

## Revendications

1. Dispositif de mesure pour l'interface (2) d'un tronçon de transmission (1) en duplex intégral par procédé duplex à porteuse commune, pour lequel sont connectés à l'interface (2) d'une part un élément d'interface (3) à haut degré d'intégration à travers un circuit de dérivation (5) et un translateur (6), et d'autre part une terminaison de ligne (LT) ou un raccordement réseau (NT) comme objet de mesure (7),
caractérisé en ce que,
- il est utilisé un dispositif reconstituant un arrangement de circuit de dérivation (5), de translateur (6) et de terminaison de ligne ou de raccordement réseau (7) qui
- comporte un amplificateur différentiel (9) à haute dépendance étant relié côté entrée avec les sorties de transmission (4) de l'élément d'interface (3) et côté sortie avec une entrée (14) d'un soustracteur (15) à travers un amplificateur différentiel supplémentaire (13) à haute impédance, et qui
- présente un circuit de dérivation (10) identique par ses propriétés électriques au circuit de dérivation (5) du tronçon de transmission (1), un translateur (11) identique au translateur (6) du tronçon de transmission (1) et une terminaison (12) identique par ses propriétés électriques à la terminaison de ligne ou au raccordement réseau (7) du tronçon de transmission (1),
- une autre entrée (16) du soustracteur (15) est reliée à l'interface (2) par le biais d'un amplificateur différentiel (17) supplémentaire à haute impédance et
- un système de mesure (19) du dispositif de mesure est connecté à la sortie (18) du soustracteur (13).

2. Dispositif de mesure suivant la revendication 1,
caractérisé en ce que,
- sur un tronçon de transmission (23) avec atténuateur (22) à l'interface (2), l'arrangement de reconstitution (20) du dispositif de mesure comporte entre le translateur identique (11) et la terminaison identique (12) un atténuateur (21) identique par ses propriétés électriques à l'atténuateur (22) du tronçon de transmission.

3. Dispositif suivant la revendication 1,
caractérisé en ce que,
- sur un tronçon de transmission (23) avec atténuateur (22) à l'interface (2), un atténuateur (30) identique à l'atténuateur (22) du tronçon de transmission (23) est intercalé à la suite de l'amplificateur différentiel (13) à haute impédance dans l'arrangement de reconstitution (31) du dispositif de mesure.
